(19) **Europäisches Patentamt / European Patent Office / Office européen des brevets**

(11) **EP 2 397 213 B1**

(12) **FASCICULE DE BREVET EUROPEEN**

(45) Date de publication et mention
de la délivrance du brevet:
**06.08.2014 Bulletin 2014/32**

(51) Int Cl.:
**B01D 53/34** *(2006.01)*   **B01D 53/50** *(2006.01)*

(21) Numéro de dépôt: **11170142.1**

(22) Date de dépôt: **16.06.2011**

(54) **Procédé de gestion du risque de corrosion dans des procédés de traitement de fumées**

Verfahren zur Steuerung des Korrosionsrisikos bei Abgasaufbereitungsverfahren

Method for managing corrosion risk in smoke treatment methods

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.06.2010 FR 1054863**

(43) Date de publication de la demande:
**21.12.2011 Bulletin 2011/51**

(73) Titulaire: **LAB SA**
**69007 Lyon (FR)**

(72) Inventeurs:
• **Siret, Bernard**
**69200 VENISSIEUX (FR)**
• **Tabaries, Franck**
**83190 OLLIOULES (FR)**

(74) Mandataire: **Grand, Guillaume et al**
**Cabinet Lavoix**
**62, rue de Bonnel**
**69448 Lyon Cedex 03 (FR)**

(56) Documents cités:
**WO-A1-88/04013    JP-A- 2 126 920**
**JP-A- 61 078 420    JP-A- 2002 370 012**
**US-A- 4 559 211    US-A- 4 792 440**

• **DATABASE WPI Week 201072 Thomson Scientific, London, GB; AN 2010-N30947 XP002617363, & JP 2010 234322 A (CHUGOKU DENRYOKU KK) 21 octobre 2010 (2010-10-21)**

**Description**

L'invention s'intéresse à la gestion du risque de corrosion et d'encrassement dans les traitements d'épuration de fumées par voie sèche ou semi-sèche.

La combustion de combustible fossiles, comme le charbon ou le fuel, ou bien l'incinération de déchets génèrent des polluants acides, en particulier l'acide chlorhydrique (HCl), le dioxyde de soufre ($SO_2$) et le trioxyde de soufre ($SO_3$), qu'il est souhaitable de retirer des fumées avant le rejet à l'atmosphère. A cette fin, différentes technologies d'épuration sont utilisées, par voie dite sèche, semi-sèche ou humide.

Par ailleurs, les installations qui génèrent ces fumées ont presque toujours pour résultat la production d'énergie qu'elle soit thermique ou électrique, qui est valorisée et contribue à l'économie du système. Aussi, des récupérateurs d'énergie, tels des chaudières, économiseurs, échangeurs de chaleur, etc., sont disposés sur le trajet des fumées et en abaissent progressivement la température.

Comme les fumées contenant les polluants acides contiennent aussi de la vapeur d'eau, il en résulte l'existence d'un point de rosée acide, qui est la température limite en deçà de laquelle les premières gouttes de condensation vont se produire. Ce point de rosée acide est situé à une valeur de température nettement plus élevée que si les fumées ne contenaient pas de polluants acides et est presque toujours supérieur à 100°C.

Du fait de la présence des polluants acides, en particulier du trioxyde de soufre, les gouttelettes de condensation qui se forment sont très acides et peuvent provoquer une corrosion importante dans les conduits et pour les équipements comme les filtres situés en aval. On prend donc en général grand soin de rester au-dessus du point de rosée acide, tout en évitant aussi de se placer par trop au-dessus de ce point de rosée acide car cela impliquerait, in fine, moins de récupération d'énergie et serait donc contraire à l'intérêt économique. Aussi, les procédés d'épuration par voie sèche sont plus performants quand on opère à une température pas trop élevée : le plus souvent, on opère entre 1300C et 230 °C.

Selon les équipements de récupération énergétique utilisés, leur fonctionnement n'est pas toujours modifiable en fonction des conditions amont, liées à la combustion, de sorte que les équipements en aval peuvent subir, lors de l'entrée des fumées, une température dite « fatale », qui résulte des conditions amont, parmi lesquelles on trouve le débit, l'humidité et la température des fumées à traiter. Ainsi, la température de ces fumées peut être amenée, à l'entrée et au cours du traitement, à se rapprocher dangereusement du point de rosée acide et à risquer la corrosion des équipements, voire à passer en deçà de celui-ci.

Il est connu que l'injection dans les fumées à traiter de réactifs alcalins, tels que la chaux, la magnésie ou le bisulfite de sodium, capte les polluants acides, et tout particulièrement le trioxyde de soufre, et va donc abaisser le point de rosée pour permettre d'éviter la corrosion. Cette injection peut se faire directement dans le foyer de combustion ou au-dessus de ce foyer, dans une zone où les fumées sont encore très chaudes, typiquement au-delà de 400oC, ou bien encore dans la conduite de sortie où les fumées sont plus froides, par exemple entre 120 et 230oC. Cette injection se fait soit à débit fixé, soit de manière régulée en fonction de la teneur de polluants acides mesurées en amont ou en aval, et du débit des fumées à traiter. Toutefois, ces approches conduisent très souvent à une surconsommation du réactif alcalin : en effet, la problématique de corrosion n'est réelle que sur le long terme et il est inutile de procéder à des ajustements sur le court terme puisque la gestion des polluants acides elle-même est assurée par d'autres équipements situés en aval des équipements de récupération de chaleur, ces autres équipements, tels que des filtres, recevant leur propre injection de réactif de neutralisation, typiquement de la chaux, de la magnésie ou du bicarbonate de sodium, régulée selon les polluants présents. Par ailleurs, l'injection en amont d'un réactif alcalin prend rarement en compte les variations d'humidité des fumées, ce qui a pourtant un impact sur le point de rosée acide et donc sur les risques de corrosion en aval.

Dans ce contexte, JP-A-61 078420 divulgue que la température de point de rosée acide peut être calculée à partir de l'humidité de fumées à traiter et de leur teneur en trioxyde de soufre. Cette température ainsi calculée, ainsi que la mesure de la température effective des fumées servent à la commande optimisée d'un précipitateur électrostatique, sans toutefois que JP-A-61 078420 évoque la présence de réactifs de neutralisation des polluants acides des fumées. De son côté, JP-A-2 126920 divulguerait, à la fois, l'utilisation de tels réactifs et, de manière indépendante, la surveillance du point de rosée des fumées, qui est lié à la teneur en eau, prévue ajustable, des fumées et qui ne doit pas être confondu avec le point de rosée acide évoqué plus haut, à des fins de limitation des risques de corrosion. WO-A-88/04013 décrit, quant à lui, un procédé général de traitement de fumées, dans lequel les fumées passent , entre autres, dans un échangeur et dans un filtre à manches, et dans lequel des réactifs de neutralisation des polluants acides de ces fumées sont introduits en divers points du circuit de ces fumées : ces réactifs sont explicitement prévus en des quantités largement suffisantes, mais donc non optimisées, pour garantir une température de service bien supérieure à la température de point de rosée des fumées.

Ceci étant posé, le but de la présente invention est de proposer un procédé et une installation de traitement améliorés, qui gèrent de manière plus performante le risque de corrosion lié notamment à la présence de trioxyde de soufre dans les fumées à traiter.

A cet effet, l'invention a pour objet un procédé de traitement de fumées, tel que défini à la revendication 1.

L'idée à la base de l'invention est de chercher à réguler, avec une temporisation, la quantité du réactif de neutralisation dédié au trioxyde de soufre, qui est introduite en amont du ou des échangeurs de chaleur traversés par les fumées à traiter, de manière que la température de rosée acide calculée reste inférieure à la température des fumées filtrées, de plus de 5 à 30°C. L'invention confère ainsi une protection vis-à-vis de la corrosion, sans pour autant que la température des fumées traitées ne s'écarte par trop du point de rosée acide, ce qui serait défavorable en terme d'efficacité à la captation des polluants acides autres que le trioxyde de soufre, présents dans les fumées, en lien avec des produits de neutralisation dédiés à ces autres polluants acides que sont par exemple le dioxyde de soufre et/ou l'acide chlorhydrique .

D'autres caractéristiques additionnelles avantageuses du procédé conforme à l'invention, prises isolément ou selon toutes les combinaisons techniquement possibles, sont spécifiées aux revendications dépendantes 2 à 9.

L'invention a également pour objet une installation de traitement de fumées, telle que définie à la revendication 10.

L'invention sera mieux comprise à la lecture de la description qui va suivre, donnée uniquement à titre d'exemple et faite en se référant aux dessins sur lesquels :

- la figure 1 est une vue schématique d'une installation conforme à l'invention ; et
- les figures 2 et 3 sont des graphiques représentant l'évolution dans le temps de plusieurs valeurs mesurées ou calculées.

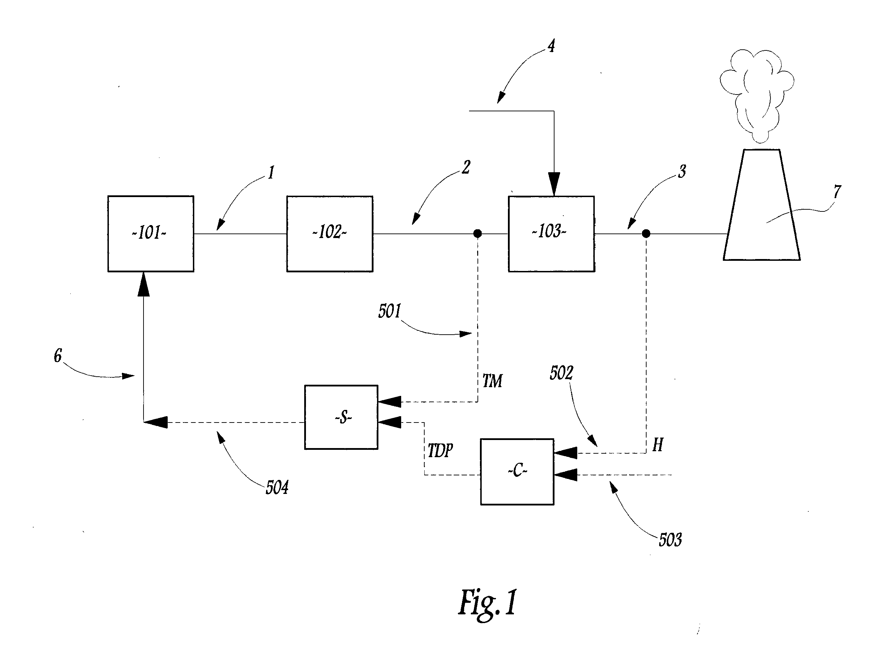

Comme représenté sur la figure 1, une unité de combustion 101, pouvant être, de manière non limitative, un incinérateur de déchets ménagers, de déchets hospitaliers ou de déchets spéciaux, produit des fumées de combustion 1 contenant de l'humidité et des polluants acides, dont, entre autres, du trioxyde de soufre.

En sortie de l'unité 101, les fumées 1 traversent un échangeur de chaleur 102 destiné à récupérer une partie de la chaleur des fumées. Cet échangeur 102 inclut ou consiste en, par exemple, une chaudière, un réchauffeur de condensats, un économiseur, etc. En sortie de l'échangeur 102, les fumées 2 présentent une température comprise entre 110 °C et 230 °C.

Selon une des caractéristiques de l'invention, l'échangeur de chaleur 102, ou au moins son composant le plus en aval au sein de cet échangeur, n'est pas à même d'assurer une température fixe à sa sortie. La température des fumées refroidies 2 peut donc fluctuer et est qualifiée de « fatale ».

Les fumées refroidies 2 sont admises dans un dispositif d'épuration schématisé par un bloc 103, ce dispositif étant composé en général de plusieurs équipements tels que, de manière non limitative, des filtres à manches, des électrofiltres et des réacteurs catalytiques. Selon l'invention, le dispositif 103 comprend au moins un filtre à manches qui opère à une température comprise entre 110°C et 230°C, de préférence entre 130°C et 160°C. En effet, pour être efficace, certains des équipements précités, dont en particulier le ou les filtres à manches, doivent travailler à une température pas trop élevée.

Plusieurs réactifs de neutralisation 4, ainsi que d'autres additifs le cas échéant, sont introduits dans le dispositif 103. L'introduction de ces produits 4 n'est pas l'objet de l'invention. En sortie du dispositif 103, les fumées épurées 3 sont dirigées vers une cheminée 7 d'évacuation à l'atmosphère.

Selon l'invention, on mesure en permanence la température TM des fumées traversant le filtre à manches du dispositif 103, notamment soit en amont, soit en aval de ce filtre à manches. De manière préférée, la température TM est mesurée immédiatement en amont du filtre à manches précité. Le signal portant l'information de mesure de température correspondante est référencé 501 sur la figure 1.

Selon l'invention, on mesure en permanence l'humidité H des fumées traversant le filtre à manches du dispositif 103. Cette mesure, faite par des moyens connus en soi, est réalisée de préférence sur les fumées 3, notamment à l'aide d'un analyseur au niveau de la cheminée 7. En variante, cette mesure d'humidité H peut être réalisée en sortie de l'unité de combustion 101, sur les fumées 1. Le signal portant l'information de mesure d'humidité correspondante est référencé 502 sur la figure 1.

Selon l'invention, on dispose en permanence d'une valeur de la teneur en trioxyde de soufre présente dans les fumées 1. En pratique, cette teneur en trioxyde de soufre est soit mesurée, typiquement à l'aide d'un appareil spécifique, soit, de préférence, obtenue par une estimation. Cette estimation correspond à une valeur prédéterminée empirique, par exemple issue de connaissances préétablies ou acquises par des déterminations préalables, ou bien cette estimation correspond à une valeur calculée à partir de la teneur des fumées 1 en dioxyde de soufre, dont la teneur est mesurée par un appareil spécifique dont les performances de mesure sont généralement supérieures à celles d'un appareil permettant de mesurer directement la teneur en trioxyde de soufre. Le signal portant l'information de mesure relative à la teneur en trioxyde de soufre est référencé 503 sur la figure 1.

Selon l'invention, à partir des mesures de l'humidité H et des valeurs de la teneur en trioxyde de soufre, on calcule en permanence une estimation du point de rosée acide, la valeur de température correspondante étant référencée TDP. En pratique, le calcul est réalisé par un calculateur C qui est connu en soi, en étant, par exemple, un automate programmable ou un ordinateur gérant la supervision de l'installation, et qui reçoit les signaux 502 et 503. Des formules permettant le calcul de la valeur TDP sont connues et ne font pas l'objet de l'invention. On pourra utiliser, à titre d'exemple et d'exemple seulement, la formule suivante :

$$TDP\ (°C) = 203.95 + 27.6 \log_{10}(pH_2O) + 10.83 \log_{10}(pSO_3) + 1006\ [\log_{10}(pSO_3) + 8]^{2.19}$$

dans laquelle :

- $pH_2O$ est la pression partielle en eau, en atmosphère,
- $pSO_3$ est la pression partielle en trioxyde de soufre, en atmosphère, et
- $\log_{10}$ représente le logarithme décimal.

Selon l'invention, la valeur calculée TDP est en permanence comparée à la valeur mesurée de température TM, fournie par le signal 501.

Si la différence entre la valeur de température mesurée TM et la valeur de point de rosée acide calculée TDP reste, pendant une période de temps supérieure à une valeur fixée TEMPO comprise entre deux minutes et une heure, inférieure à une valeur préfixée DTSAFE comprise entre 5 et 25°C, de préférence entre 10 et 25°C, on ajuste à la hausse le débit d'un réactif de neutralisation 6 qui est introduit dans les fumées à traiter 1, en particulier dans l'unité de combustion 101 ou bien, en variante, en aval de cette unité 101 mais en amont de l'échangeur 102. En effet, il est connu que l'introduction d'un tel réactif de neutralisation 6 permet de diminuer fortement la teneur en trioxyde de soufre et donc d'abaisser, toutes choses égales par ailleurs, le point de rosée acide. Ce réactif de neutralisation 6 est typiquement de la chaux, de la magnésie, une chaux à grande surface spécifique ou du bisulfite de sodium.

On notera que la quantité de ce réactif 6 à introduire dans les fumées à traiter 1 est nécessairement faible puisque ce réactif va réagir de manière préférentielle sur le trioxyde de soufre, comparativement aux autres polluants acides de ces fumées, notamment l'acide chlorhydrique et le dioxyde de soufre. Autrement dit, l'introduction du réactif 6 vise à contrôler la teneur en trioxyde de soufre et non à abattre, même s'il y contribue, le dioxyde de soufre et l'acide chlorhydrique, cet abattement étant pour la majeure partie réalisé en aval par les réactifs de neutralisation 4, dans le dispositif d'épuration 103. Ainsi, à titre d'exemple, dans le cas d'une différence entre les valeurs TM et TDP faiblement inférieure à DTSAFE, le débit de réactif 6 est augmenté de 10 à 50%.

Similairement et toujours selon l'invention, si la différence entre la valeur de température TM et la valeur de point de rosée acide calculée TDP reste, pendant une période de temps supérieure à une valeur préfixée TEMPO2, pouvant être égale ou non à TEMPO, également comprise entre deux minutes et une heure, supérieure à une valeur préfixée DTSAFE2, strictement supérieure à la valeur DTSAFE et comprise entre 10 et 30°C, de préférence entre 15 et 25°C, on ajuste à la baisse le débit du réactif de neutralisation 6.

Ainsi, l'invention consiste en une régulation, avec temporisation, du débit de réactif 6 de manière que la température de rosée acide calculée TDP reste inférieure à la température mesurée TM de plus de 5 à 30°C, garantissant ainsi une protection efficace vis-à-vis de la corrosion, sans pour autant que le dispositif d'épuration 103 ne reçoive des fumées dont la température serait trop éloignée du point de rosée acide, ce qui serait défavorable en termes d'efficacité à la captation des polluants acides autres que le trioxyde de soufre, notamment l'acide chlorhydrique et le dioxyde de soufre.

En pratique, un calculateur S effectue le calcul de comparaison précité et décide de la consigne à donner pour la quantité de réactif 6 introduite dans les fumées 1, via un signal d'information référencé 504 sur la figure 1. Ce calculateur S est par exemple un automate programmable ou bien est intégré au système de supervision de l'installation. L'algorithme fixant la consigne de commande de la quantité du réactif 6 est connu en soi et n'est pas l'objet de la présente invention. D'ailleurs, en plus de la différence entre les valeurs TDP et TM, cet algorithme peut utiliser d'autres informations telles que le débit des fumées 1 ou celui des fumées 3, leur température et des données relatives à leur composition. Par exemple, le débit de réactif 6 peut être corrigé de manière proportionnelle au débit des fumées 1 ou au débit des fumées 3.

L'homme du métier comprendra que, lorsque, dans le présent document, on utilise l'expression « en permanence » en ce qui concerne les opérations de mesure et de calcul, on vise ici à un traitement de données en temps réel, c'est-à-dire un traitement selon lequel les données liées aux mesures ou aux calcules sont traitées immédiatement après leur acquisition, le temps de réponse séparant l'entrée des données de l'émission de résultats étant réduit au minimum, en étant typiquement dépendant de la fréquence de fonctionnement des moyens de mesure et de calcul utilisés, dont les calculateurs C et S.

L'invention peut être mieux comprise à l'aide de l'exemple suivant :

On considère que l'unité de combustion 101 est une unité d'incinération de déchets municipaux et que l'échangeur 102 comprend, successivement suivant le trajet d'écoulement de fumée à traiter, une chaudière et un économiseur. Les fumées 2 sortant de l'économiseur présentent une température fatale qui n'est pas régulée et qui fluctue entre 130°C et 155°C. Ces fumées 2 sont débarrassées de leurs gaz acides, notamment l'acide chlorhydrique et le dioxyde de soufre, dans un filtre à manches du dispositif 103, utilisant de la chaux comme réactif 4. Le débit des fumées traversant ce filtre à manches est d'environ 30 000 Nm$^3$/h. Une chaux à grande surface spécifique est utilisée en temps que réactif de neutralisation 6, en étant injectée, juste au-dessus de la zone de combustion de l'unité d'incinération, avec un débit nominal de 2 kg/h.

La température TM des fumées 2 est mesurée en entrée du filtre à manches, l'humidité H est mesurée par un analyseur au niveau d'une cheminée d'évacuation similaire à la cheminée 7.

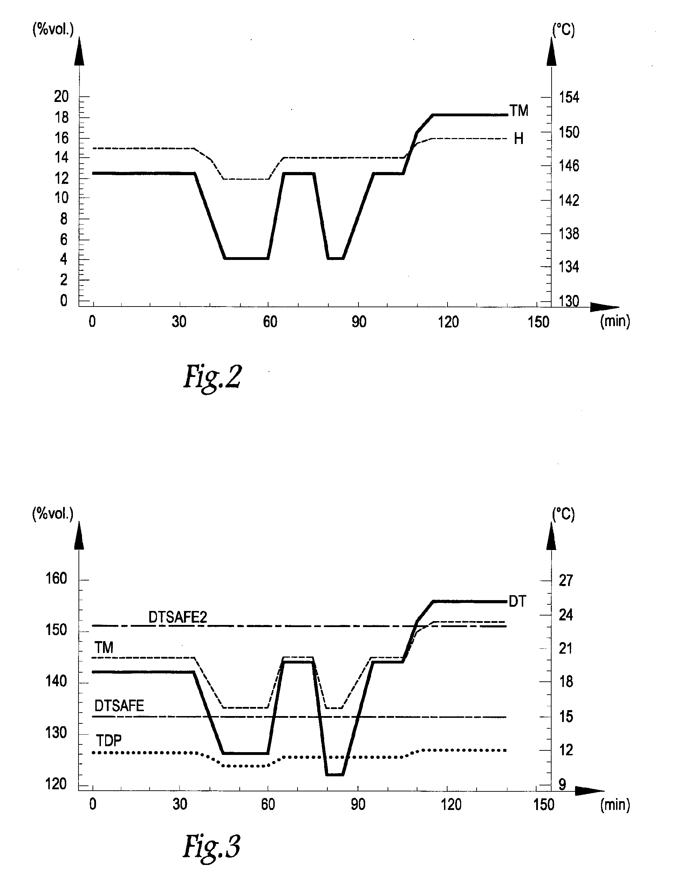

Sur la figure 2 sont reproduites les courbes d'évolution de la température TM et de l'humidité H mesurées, en fonction du temps.

On choisit des durées de latence TEMPO et TEMPO2 égales, valant cinq minutes. Les seuils DTSAFE et DTSAFE2 sont respectivement fixés à 15°C et 23°C. De plus en utilisant une valeur préfixée, issue d'une détermination préalable, de 2 ppmv à titre d'estimation de la teneur en trioxyde de soufre, la température de rosée acide TDP est calculée en permanence, comme expliqué plus haut, et est comparée en permanence aux limites DTSAFE et DTSAFE2. Les mesures et calculs correspondants sont reportés sur la figure 3, sur laquelle la valeur absolue de la différence entre les valeurs TM et TDP est référencée DT.

Au vu de la figure 3, on constate que, au temps t = 40 min, l'écart de température entre les valeurs TM et TDP passe en deçà de DTSAFE. On se rapproche donc d'une zone dangereuse en ce qui concerne la corrosion. Au bout de cinq minutes de temporisation, c'est-à-dire la valeur préfixée pour TEMPO, soit à t = 45 minutes, le dosage du réactif 6 est modifié à la hausse, en passant de 2 à 3 kg/h.

Puis, la température n'étant pas régulée et l'humidité fluctuant, l'écart DT calculé entre TM et TDP continue à fluctuer, mais ne repasse au-dessus du second seuil DTSAFE2 qu'au temps t = 110 minutes. Après cinq minutes de temporisation, soit à t = 115 minutes, le débit de réactif 6 est ajusté à la baisse, en repassant à un débit de 2 kg/h.

## Revendications

1. Procédé de traitement de fumées contenant du trioxyde de soufre et d'autres polluants acides,

   dans lequel les fumées à traiter (1) traversent successivement au moins un échangeur de chaleur (102), non régulé en température, et un filtre à manches (103),

   dans lequel le trioxyde de soufre des fumées est essentiellement neutralisé par un réactif de neutralisation (6) qui est introduit dans les fumées à traiter (1) avant qu'elles traversent l'échangeur de chaleur (102), tandis que lesdits autres polluants acides des fumées sont essentiellement neutralisés par un produit de neutralisation (4) qui est introduit dans le filtre à manches (103),

   dans lequel on mesure en permanence la température (TM) et l'humidité (H) des fumées traversant le filtre à manches (103),

   et dans lequel, à partir de la valeur d'humidité mesurée (H) et d'une valeur de la teneur en trioxyde de soufre des fumées à traiter (1), on calcule en permanence une valeur (TDP) du point de rosée acide et on la compare en permanence à la valeur de température mesurée (TM) de sorte que :

   - si la différence (TM-TDP) entre la valeur de température mesurée (TM) et la valeur de point de rosée acide calculée (TDP) est inférieure à un premier seuil préfixé (DTSAFE), valant entre 5 et 25°C, pendant une première période de temps (TEMPO) comprise entre deux minutes et une heure, on augmente la quantité du réactif de neutralisation (6) introduite dans les fumées à traiter (1), et

   - si la différence (TM-TDP) entre la valeur de température mesurée (TM) et la valeur de point de rosée acide calculée (TDP) est supérieure à un second seuil préfixé (DTSAFE2), strictement supérieur au premier seuil préfixé (DTSAFE) et valant entre 10 et 30°C, pendant une seconde période de temps (TEMPO2) comprise entre deux minutes et une heure, on diminue la quantité du réactif de neutralisation (6) introduite dans les fumées à traiter (1).

2. Procédé suivant la revendication 1, **caractérisé en ce que** les fumées à traiter (1) proviennent d'une unité de combustion (101) dans laquelle ou en sortie de laquelle est injecté le réactif de neutralisation (6).

3. Procédé suivant l'une des revendications 1 ou 2, **caractérisé en ce que** la valeur de température (TM) est mesurée dans les fumées (2) en entrée du filtre à manches (103).

**4.** Procédé suivant l'une des revendications 1 ou 2, **caractérisé en ce que** la valeur de température (TM) est mesurée dans les fumées (3) sortant du filtre à manches (103).

**5.** Procédé suivant l'une quelconque des revendications précédentes, **caractérisé en ce que** la valeur d'humidité (H) est mesurée dans les fumées (3) sortant du filtre à manches (103), notamment dans une cheminée (7) d'évacuation à l'atmosphère.

**6.** Procédé suivant l'une quelconque des revendications précédentes, **caractérisé en ce que**, pour disposer de la valeur de la teneur en trioxyde de soufre, on mesure en permanence cette teneur dans les fumées à traiter (1).

**7.** Procédé suivant l'une des revendications 1 à 5, **caractérisé en ce que** la valeur de la teneur en trioxyde de soufre est préfixée à une valeur issue de connaissances acquises antérieurement.

**8.** Procédé suivant l'une quelconque des revendications 1 à 5, **caractérisé en ce que**, pour disposer de la valeur de la teneur en trioxyde de soufre, on estime cette teneur à partir d'une mesure de la teneur en dioxyde de soufre des fumées à traiter (1).

**9.** Procédé suivant l'une quelconque des revendications précédentes, **caractérisé en ce que** le réactif de neutralisation (6) est choisi parmi de la chaux, de la magnésie, d'une chaux à grande surface spécifique et du bisulfite de sodium.

**10.** Installation de traitement de fumées contenant du trioxyde de soufre et d'autres polluants acides, pour la mise en oeuvre du procédé conforme à l'une quelconque des revendications précédentes, comprenant :

- un dispositif d'introduction d'un réactif (6) de neutralisation du trioxyde de soufre dans les fumées à traiter (1) ;
- au moins un échangeur de chaleur (102), non régulé en température, qui, en entrée, est alimenté par les fumées (1) dans lesquelles le réactif (6) a été introduit,
- un filtre à manches (103) qui, en entrée, est raccordé en aval de l'échangeur de chaleur (102),
- un dispositif d'introduction, dans le filtre à manches (103), d'un produit (4) de neutralisation desdits autres polluants acides,
- des moyens de mesure de la température (TM) et de l'humidité (H) des fumées traversant le filtre à manches (103), et
- des moyens de calcul (C, S) adaptés à la fois pour calculer une valeur (TDP) du point de rosée acide à partir de la valeur d'humidité (H) fournie par les moyens de mesure et d'une valeur de la teneur en trioxyde de soufre des fumées à traiter (1), pour comparer la valeur de point de rosée acide calculée (TDP) à la valeur de température mesurée (T) fournie par les moyens de mesure, et pour commander le dispositif d'introduction de réactif (6) en fonction du résultat de comparaison.

**Patentansprüche**

**1.** Verfahren zur Behandlung von Rauchgasen, die Schwefeltrioxid und andere säurehaltigen Schadstoffe enthalten, bei dem die zu behandelnden Rauchgase (1) nacheinander mindestens einen Wärmetauscher (102), der in der Temperatur nicht geregelt ist, und ein Beutelfilter (103) durchströmen,
bei dem das Schwefeltrioxid der Rauchgase hauptsächlich von einem Neutralisierungsmittel (6) neutralisiert wird, das in die zu behandelnden Rauchgase (1) eingeführt wird, bevor sie den Wärmetauscher (102) durchströmen, während die anderen säurehaltigen Schadstoffe der Rauchgase hauptsächlich durch einen Neutralisierungsstoff (4) neutralisiert werden, der in das Beutelfilter (103) eingeführt wird, wobei die Temperatur (TM) und die Feuchte (H) der Rauchgase, die das Beutelfilter (103) durchströmen, ständig gemessen werden und wobei aus dem Wert der gemessenen Feuchte (H) und einem Wert des Gehalts an Schwefeltrioxid der zu behandelnden Rauchgase (1) ständig ein Wert (TDP) des Säuretaupunkts berechnet wird und ständig dieser Wert mit dem gemessenen Temperaturwert (TM) verglichen wird, so dass:

- wenn die Differenz (TM-TDP) zwischen dem gemessenen Temperaturwert (TM) und dem berechneten Wert des Säuretaupunkts (TDP) kleiner als ein vorgegebener erster Schwellenwert (DTSAFE) ist, geltend zwischen 5 und 25°C, während eines ersten Zeitraums (TEMPO), der zwischen zwei Minuten und einer Stunde liegt, die Menge an in die zu behandelnden Rauchgase (1) eingeführtem Neutralisierungsmittel (6) erhöht wird, und
- wenn die Differenz (TM-TDP) zwischen dem gemessenen Temperaturwert (TM) und dem berechneten Wert (TDP) des Säuretaupunkts größer ist als ein zweiter vorgegebener Schwellenwert (DTSAFE2), der unbedingt größer als der erste vorgegebene Schwellewert (DTSAFE) ist und zwischen 10 und 30°C gilt, während eines zweiten Zeitraums (TEMPO2), der zwischen zwei Minuten und einer Stunde liegt, die Menge des in die zu behandelnden Rauchgase (1) eingeführten Neutralisationsmittel (6) verringert wird.

2. Verfahren nach Anspruch 1, **dadurch gekennzeichnet, dass** die zu behandelnden Rauchgase (1) aus einer Verbrennungseinheit (101) stammen, in der oder an deren Ausgang das Neutralisierungsmittel (6) eingespritzt wird.

3. Verfahren nach einem der Ansprüche 1 oder 2, **dadurch gekennzeichnet, dass** der Temperaturwert (TM) in den Rauchgasen (2) beim Eintritt des Beutelfilters (103) gemessen wird.

4. Verfahren nach einem der Ansprüche 1 oder 2, **dadurch gekennzeichnet, dass** der Temperaturwert (TM) in den Rauchgasen (3) gemessen wird, wenn sie aus dem Beutelfilter (103) austreten.

5. Verfahren nach einem beliebigen der vorhergehenden Ansprüche, **dadurch gekennzeichnet, dass** der Wert der Feuchte (H) in den das Beutelfilter (103) verlassenden Rauchgasen (3) gemessen wird, insbesondere in einem Kamin (7) für den Abzug in die Atmosphäre.

6. Verfahren nach einem beliebigen der vorhergehenden Ansprüche, **dadurch gekennzeichnet, dass** um über den Wert des Gehalts an Schwefeltrioxid zu verfügen, dieser Gehalt in den zu behandelnden Rauchgasen (1) ständig gemessen wird.

7. Verfahren nach einem der Ansprüche 1 oder 5, **dadurch gekennzeichnet, dass** der Wert des Gehalts an Schwefeltrioxid auf einen Wert voreingestellt ist, der aus Kenntnissen hervorgeht, die zuvor erlangt wurden.

8. Verfahren nach einem beliebigen der Ansprüche 1 bis 5, **dadurch gekennzeichnet, dass** um über den Wert des Gehalts an Schwefeltrioxid zu verfügen, dieser Gehalt aus einer Messung des Gehalts an Schwefeldioxid der zu behandelnden Rauchgase (1) geschätzt wird.

9. Verfahren nach einem beliebigen der vorhergehenden Ansprüche, **dadurch gekennzeichnet, dass** das Neutralisierungsmittel (6) ausgewählt wird aus Kalk, Magnesium, einem Kalk mit großer spezifischer Fläche und Natriumbisulfit.

10. Anlage zur Behandlung von Rauchgasen, die Schwefeltrioxid und andere säurehaltigen Schadstoffe enthalten, zur Durchführung des Verfahrens nach einem beliebigen der vorhergehenden Ansprüche, umfassend:

  - eine Vorrichtung zur Einführung eines Mittels (6) zur Neutralisierung des Schwefeltrioxids in die zu behandelnden Rauchgase (1);
  - mindestens einen Wärmetauscher (102), der nicht in der Temperatur geregelt ist und am eintrittsseitig mit Rauchgasen (1) beschickt wird, in denen das Mittel (6) eingeführt wurde,
  - ein Beutelfilter (103), das eintrittsseitig stromabwärts zum Wärmetauscher (102) angeschlossen ist,
  - eine Vorrichtung zur Einführung in das Beutelfilter (103) eines Stoffs (4) zur Neutralisierung der anderen säurehaltigen Schadstoffe,
  - Mittel zur Messung der Temperatur (TM) und der Feuchte (H) der Rauchgase, die das Beutelfilter (103) durchströmen und
  - Mittel zum Berechnen (C, S), die gleichzeitig angepasst sind, einen Wert (TDP) des Säuretaupunkts aus dem Wert der Feuchte (H), der von den Mitteln zur Messung geliefert wird, und einem Wert des Gehalts an Schwefeltrioxid der zu behandelnden Rauchgase (1) zu berechnen, den berechneten Wert des Säuretaupunkts (TDP) mit dem gemessenen Wert der Temperatur (T), der von den Mitteln zur Messung geliefert wird, zu vergleichen und die Vorrichtung zur Einführung des Mittels (6) abhängig von dem Ergebnis des Vergleichs zu steuern.

## Claims

1. Method for treating fumes containing sulphur trioxide and other acidic pollutants,
in which the fumes to be treated (1) pass successively through at least one heat exchanger (102), which is not temperature-regulated, and a bag filter (103),
in which the sulphur trioxide of the fumes is essentially neutralised by a neutralisation reagent (6) which is introduced into the fumes to be treated (1) before they pass through the heat exchanger (102), whilst said other acidic pollutants of the fumes are essentially neutralised by a neutralisation product (4) which is introduced into the bag filter (103), in which the temperature (TM) and the humidity (H) of the fumes passing through the bag filter (103) are measured continuously, and in which, from the measured humidity value (H) and from a value of the content of sulphur trioxide of the fumes to be treated (1), a value (TDP) of the acid dewpoint is calculated continuously and is compared continuously to the measured temperature value (TM) so that:

- if the difference (TM - TDP) between the measured temperature value (TM) and the calculated acid dewpoint value (TDP) is less than a first pre-set threshold (DTSAFE), of between 5 and 25°C, during a first period of time (TEMPO) of between two minutes and one hour, the quantity of neutralisation reagent (6) introduced into the fumes to be treated (1) is increased,
and
- if the difference (TM - TDP) between the measured temperature value (TM) and the calculated acid dewpoint value (TDP) is greater than a second pre-set threshold (DTSAFE2), strictly greater than the first pre-set threshold (DTSAFE) and of between 10 and 30°C, during a second period of time (TEMPO2) of between two minutes and one hour, the quantity of neutralisation reagent (6) introduced into the fumes to be treated (1) is decreased.

2. Method according to claim 1, **characterised in that** the fumes to be treated (1) come from a combustion unit (101) in which or at the outlet of which the neutralisation reagent (6) is injected.

3. Method according to one of the claims 1 or 2, **characterised in that** the temperature value (TM) is measured in the fumes (2) at the inlet of the bag filter (103).

4. Method according to one of the claims 1 or 2, **characterised in that** the temperature value (TM) is measured in the fumes (3) leaving the bag filter (103).

5. Method according to any of the preceding claims, **characterised in that** the humidity value (H) is measured in the fumes (3) leaving the bag filter (103), in particular in a chimney (7) for discharge to the atmosphere.

6. Method according to any of the preceding claims, **characterised in that**, in order to have available the value of the content of sulphur trioxide, this content in the fumes to be treated (1) is measured continuously.

7. Method according to one of the claims 1 to 5, **characterised in that** the value of the content of sulphur trioxide is pre-set to a value which stems from previously acquired knowledge.

8. Method according to any of the claims 1 to 5, **characterised in that**, in order to have available the value of the content of sulphur trioxide, this content is estimated from a measurement of the content of sulphur dioxide of the fumes to be treated (1).

9. Method according to any of the preceding claims, **characterised in that** the neutralisation reagent (6) is chosen from lime, from magnesium, from a lime with a large specific surface and from sodium bisulphite.

10. Plant for treating fumes containing sulphur trioxide and other acidic pollutants, for implementing the method according to any of the preceding claims, comprising:

- a device for introducing a reagent (6) for neutralisation of the sulphur trioxide into the fumes to be treated (1);
- at least one heat exchanger (102), which is not temperature-regulated and, at the inlet, is supplied with the fumes (1) in which the reagent (6) has been introduced,
- a bag filter (103) which, at the inlet, is connected downstream of the heat exchanger (102),
- a device for introducing, into the bag filter (103), a product (4) for neutralisation of said other acidic pollutants,
- means for measuring the temperature (TM) and the humidity (H) of the fumes passing through the bag filter (103), and
- calculation means (C, S) which are adapted for calculating, at the same time, a value (TDP) of the acid dewpoint from the humidity value (H) provided by the measuring means and a value of the content of sulphur trioxide of the fumes to be treated (1), in order to compare the calculated acid dewpoint value (TDP) to the measured temperature value (T) provided by the measuring means, and for controlling the device for introducing the reagent (6) as a function of the comparison result.

*Fig.1*

*Fig.2*

*Fig.3*

**EP 2 397 213 B1**

**RÉFÉRENCES CITÉES DANS LA DESCRIPTION**

**Documents brevets cités dans la description**

- JP 61078420 A
- JP 2126920 A
- WO 8804013 A